# EUROPÄISCHE PATENTSCHRIFT

(11) **EP 2 276 600 B1**
(45) Veröffentlichungstag und Bekanntmachung des Hinweises auf die Patenterteilung: **12.02.2014**
(21) Anmeldenummer: 09731365.4
(22) Anmeldetag: 30.03.2009
(51) Int. Cl.: B23C 5/10

(54) **SCHAFTFRÄSER MIT UNTERSCHIEDLICHEN DRALLWINKELN**
END MILL WITH VARYING HELIX ANGLES
FRAISE À QUEUE PRÉSENTANT DIFFÉRENTS ANGLES D'INCLINAISON

(30) Priorität: 10.04.2008 DE 102008018399
(43) Veröffentlichungstag der Anmeldung: 26.01.2011
(73) Patentinhaber: Sandvik Intellectual Property AB, 811 81 Sandviken (SE)
(72) Erfinder: TARDIVO, Maurizio, I-28060 Brentonico (IT)
(74) Vertreter: WSL Patentanwälte Partnerschaft mbB
(86) Internationale Anmeldenummer: PCT/EP2009/053708
(87) Internationale Veröffentlichungsnummer: WO 2009/124851

(56) Entgegenhaltungen:
- EP-A- 1 894 655
- DE-A1- 3 413 290
- DE-A1- 3 706 282
- US-A- 2 782 490

## Beschreibung

Die vorliegende Erfindung betrifft einen Schaftfräser für die grobe Bearbeitung metallischer Werkstücke, mit einer geraden Anzahl von entlang des Fräserumfanges spiralförmig umlaufenden Hauptschneiden, welche abwechselnd einen relativ kleineren und einen relativ größeren Drallwinkel mit der Achse des Fräsers einschließen, wobei die Schneiden welche den kleineren Drallwinkel mit der Achse einschließen, als ungeradzahlige Schneiden definiert sind und wobei unmittelbar an dem stirnseitigen Ende des Fräsers die Umfangswinkelabstände zwischen den ungeradzahligen Hauptschneiden und den in Rotationsrichtung darauf folgenden geradzahligen Hauptschneiden kleiner sind als die Umfangswinkelabstände zwischen den geradzahligen Hauptschneiden und den in Rotationsrichtung darauf folgenden ungeradzahligen Hauptschneiden.

Es sei angemerkt, daß die Definitionen von "geraden" und "ungeraden" Schneidkanten willkürlich gewählt wurden, was bedeutet, daß die Begriffe "geradzahlig" und "ungeradzahlig" in der gesamten vorliegenden Beschreibung und den Ansprüchen auch ausgetauscht werden könnten. Alternativ könnte man auch von einer ersten und einer zweiten Gruppe von Hauptschneiden sprechen. Als Hauptschneiden werden bei einem Schaftfräser die schraubenförmig entlang einer gedachten Rotationsfläche (im allgemeinen einer Zylindermantelfläche) verlaufenden Schneiden bezeichnet während etwaige Schneiden an der Stirnseite des Schneidteils, die in einer Ebene in etwa senkrecht zur Achse des Fräsers verlaufen, als Nebenschneiden bezeichnet werden

Ein entsprechender Fräser ist aus der DE 37 06 282 bekannt. Diese Druckschrift beschreibt einen Schaftfräser mit einer geraden Anzahl von Hauptschneiden, die in wenigstens einer Ebene, welche senkrecht zur Achse des Fräsers verläuft, den gleichen Umfangsabstand von einander haben.

Sinn und Zweck eines solchen Fräsers ist es, zum einen aufgrund der unterschiedlichen Umfangsabstände zwischen aufeinanderfolgenden Schneiden zu verhindern, daß der Fräser durch den intermittierenden Eingriff mit dem Werkstück in Schwingungen und möglicherweise in Resonanz gerät, und zum anderen soll ein entsprechender Fräser auch relativ einfach ohne allzu hohen Aufwand herstellbar sein. Schließlich kommt es noch darauf an, daß die während des Fräsens auftretende Belastung und damit auch der Verschleiß möglichst gleichmäßig auf alle Schneiden verteilt wird.

Die vorstehend genannte DE 37 06 282 befasst sich dabei insbesondere mit einer Ausgestaltung des Fräsers, der eine einfachere Herstellung erlaubt, als dies aus dem Stand der Technik zuvor bekannt war.

Dabei nimmt die DE 37 06 282 allerdings in Kauf, daß in zumindest einer Ebene die Umfangswinkelabstände aller vier Schneiden identisch sind, wobei zu berücksichtigen ist, daß wegen der insgesamt relativ geringen Unterschiede zwischen den verschiedenen Drallwinkeln auch die an die betreffende Axialebene angrenzenden Bereiche noch weitgehend die Bedingung erfüllen, daß dort die Schneidkanten in Umfangsrichtung im wesentlichen gleiche Abstände aufweisen. Dieser Bereich wird umso größer, je weniger die verschiedenen Drallwinkel der Hauptschneidkanten sich voneinander unterscheiden. Auch an dem stirnseitigen Ende des Schneidteils sind bei dem bekannten Fräser die Umfangsabstände jeweils zweier Paare von Hauptschneiden gleich. Generell haben bei dem Fräser gemäß DE 37 06 282 die Umfangsabstände in allen zur Achse senkrechten Ebenen mindestens paarweise gleiche Werte.

Dies kann dazu führen, daß Schwingungen des Fräsers nicht in dem Maße vermieden werden können, wie dies an sich durch den unterschiedlichen Schneidenabstand angestrebt wird.

Der vorliegenden Erfindung liegt daher die Aufgabe zugrunde, einen Schaftfräser mit den eingangsgenannten Merkmalen zu schaffen, der Schwingungen des Werkzeuges aufgrund des intermittierenden Eingriffs mit einem Werkstück noch besser verhindern kann.

Diese Aufgabe wird mit einem Schaftfräser gemäß Anspruch 1 gelöst.

Dadurch, daß man vermeidet, daß jeweils Paare von Umfangswinkelabständen am stirnseitigen Ende des Fräsers gleich sind, kann unter Berücksichtigung der übrigen Bedingung, daß die Hauptschneiden abwechselnd einen relativ kleineren und einen relativ größeren Drallwinkel mit der Achse des Fräsers einschließen, die Situation vermieden werden, daß in irgendeiner Ebene senkrecht zur Achse des Fräsers an einer beliebigen axialen Position alle Umfangswinkelabstände zwischen den benachbarten Hauptschneiden identisch sind. Hierdurch wird die Gefahr etwaiger Schwingungen noch weiter reduziert.

Sind die Umfangswinkelabstände am stirnseitigen Ende des Fräsers und die unterschiedlichen Drallwinkel derart gewählt sind, daß nur an insgesamt drei verschiedenen axialen Positionen mindestens zwei Umfangswinkelabstände gleich und in allen anderen axialen Positionen alle Umfangswinkelabstände von einander verschieden sind, werden schon die Bereiche, wo auch nur zwei der Umfangswinkelabstände gleich sind, auf ein Minimum reduziert. In dieser Position, die vorzugsweise in etwa einer axiale Mittelposition zwischen der Stirnseite und dem rückwärtigen Ende der Hauptschneidkanten entspricht, könnten zwei Umfangswinkelabstände einen ersten, und einander gleichen Wert haben und zwei weitere Umfangswinkelabstände einen zweiten, von dem ersten verschiedenen jedoch untereinander ebenfalls gleichen Wert haben.

Obwohl also in dieser einen axialen Position ein erstes Paar von Umfangswinkelabständen und ein zweites Paar von Umfangswinkelabständen jeweils den gleichen Wert haben, sind aber diese Werte zwischen den beiden Paaren voneinander verschieden. Auf diese Weise wird selbst in diesem axialen Bereich, wo die Anzahl verschiedener Umfangswinkelabstände minimal ist und womöglich nur zwei beträgt, noch immer das Auftreten von Resonanzbedingungen weitgehend verhindert.

Dies macht entsprechende Fräser nicht nur für die Schruppbearbeitung, sondern insbesondere auch für die Schlichtbearbeitung geeignet, wobei bei der Schlichtbearbeitung ohnehin wegen der geringeren Spandicken auch geringere Kräfte auf die Hauptschneidkanten wirken.

In den Positionen, in welchen jeweils ein Paar von Umfangswinkelabständen gleich ist, ist eine Ausgestaltung der Erfindung bevorzugt, bei welcher diese gleichen Umfangswinkelabstände jeweils benachbarte Umfangswinkelabstände sind.

Darüber hinaus ist eine Ausgestaltung der Erfindung bevorzugt, bei welcher der Drallwinkel der ungeradzahligen Hauptschneiden zwischen 35° und 39° liegt und insbesondere etwa 37° beträgt und der Drallwinkel der geradzahligen Hauptschneiden zwischen 38° und 42° liegt und insbesondere etwa 40° beträgt Der Unterschied zwischen den Drallwinkeln sollte vorzugsweise in der Größenordnung von 3° liegen und kann in einem Bereich von z. B. 1° bis z. B. 8° liegen, wobei allerdings ein größerer Drallwinkelunterschied vornehmlich bei axial sehr kurzen Fräsern, deren nutzbare axiale Hauptschneidenlänge auf jeden Fall kleiner als das Zweifache und insbesondere kleiner als das 1,5-fache des Durchmessers ist, sinnvoll erscheint, weil ansonsten die Umfangswinkelabstände zwischen benachbarten Hauptschneiden sehr stark unterschiedlich wären, aber was bei einem gleichmäßigen Vorschub zu sehr stark unterschiedlichen Schneidenbelastungen führt.

Eine weitere Maßnahme, die zur Stabilisierung und Schwingungsvermeidung des Fräsers beiträgt, ist gemäß einer bevorzugten Ausführungsform ein von der Stirnseite zum Einspannende hin kontinuierlich zunehmender Kerndurchmesser. Der Umfang bzw. eine Einhüllende des Kernes kann dabei beispielsweise im wesentlichen eine Konusform mit einem Konuswinkel (zur Achse hin gemessen) zwischen 1° und 6°, insbesondere zwischen 1° und 4° aufweisen.

Für eine Grobbearbeitung ist es außerdem zweckmäßig, wenn die Hauptschneidkanten und die angrenzenden Freiflächen der Stege des Fräsers ein in axialer Richtung variierendes Profil aufweisen. Ein solches variierendes Profil kann zum Beispiel im axialen Schnitt ein Wellen- oder Zahnprofil definieren. Insbesondere ist dabei ein asymmetrisches Profil mit abwechselnd steileren und flacheren Flanken bevorzugt. Derartige Profile im Schneidkantenverlauf sorgen für eine verbesserte Spanbrechung, und können dadurch die auf die Schneidkanten wirkenden Kräfte reduzieren. Außerdem führt das asymmetrische Profil auch zu einer glatteren Werkstückoberfläche schon als Ergebnis der Grobbearbeitung.

Des weiteren ist es, jedenfalls bei konstanten Drallwinkeln der Hauptschneiden, bevorzugt wenn die Erfindung auf Fräser beschränkt wird, deren nutzbare axiale Schneidenlänge kleiner als der zweifache Nenndurchmesser des Fräsers ist. Grundsätzlich ist die Erfindung selbstverständlich auch auf axial längere Fräswerkzeuge anwendbar, jedoch müssen dann entweder die Drallwinkeldifferenzen verkleinert werden (z. B. auf 1° - 2°), oder aber man muss in Kauf nehmen, daß entlang der nutzbaren Schneidenlänge die Umfangswinkelabstände sehr stark variieren, was zu teilweise sehr unterschiedlichen Schneidebelastungen führt.

Wenn hingegen die Differenz der Drallwinkel zu stark verkleinert wäre, so ist es schwierig, größere axiale Bereiche zu vermeiden, in welchen die Umfangswinkelabstände nicht doch annähernd gleich sind.

Allerdings lässt sich das Prinzip der vorliegenden Erfindung auch auf axial beliebig lange Schneidteile von Schäftfräsem anwenden, indem nämlich, ausgehend von der Stirnseite des Fräsers, nach Erreichen einer gewissen axialen Position, die z. B. dem 1,5-fachen oder 2-fachen des Durchmessers entspricht, die Rolle der geradzahligen und ungeradzahligen Schneidkanten vertatuscht wird, so dass dann die geradzahligen Schneiden den kleineren Drallwinkel mit der Achse einschließen., was im weiteren axialen Verlauf effektiv zu einer Umkehr der vorherigen Änderungen der Umfangswinkelabstände führt. Dieser Wechsel lässt sich beliebig wiederholen. Insbesondere kann eine solcher Wechsel auch bei axial kürzeren Schneidteilen zweckmäßig sein, wenn nämlich die Drallwinkel relativ große Unterschiede von z, B. 6° bis 10° oder mehr aufweisen, so dass sich die Umfangswinkelabstände zwischen den Hauptschneiden mit der axialen Position sehr schnell verändern und ein Wechsel der kleineren und größeren Drallwinkel der geradzahligen und ungeradzahligen Schneidkanten schon in einem axialen Abstand von der Stirnseite angebracht sein kann der nur z. B. der Hälfte oder dem Einfachen des Nenndurchmessers des Fräsers entspricht

In einer Ausführungsform der Erfindung ist jeder der umfangsseitigen Hauptschneiden eine stirnseitige Nebenschneide zugeordnet, die über eine Schneidecke, welche vorzugsweise abgerundet oder abgeschrägt ist, in die zugeordnete Hauptschneide übergeht. Diese stirnseitigen Nebenschneiden verlaufen auf der Stirnseite im Wesentlichen in radialer Richtung, d. h. vom Außenumfang in Richtung der Achse des Fräsers, wobei zumindest eine der Nebenschneiden sich bis zu der Achse erstrecken kann.

Besonders bevorzugt ist eine Ausführungsform der Erfindung, bei welcher der Fräser genau vier Schneiden aufweist, wobei mit "aₙ" (n=1,..4) der Winkel zwischen der Schneide und der nächstfolgenden Schneide n+1 mod 4 bezeichnet wäre, wobei folgende Beziehung gilt: a₁ < a₃ < a₄ < a₂. Wenn nun die Drallwinkel der ungeraden Schneiden und die Drallwinkel der geraden Schneiden jeweils gleich, jedoch zwischen geraden und ungeraden Schneiden jeweils verschieden sind und sich um z. B. 3° unterscheiden, so erreicht man, daß etwa im Bereich einer axialen Mittelposition (bezogen auf die nutzbar axiale Schneidenlänge) die Umfangswinkelabstände aₙ eines vierschneidigen Fräsers die Bedingungen 88° < a₁ = a₄ < 89,5° und 90,5° < a₂ = a₃ < 92° erfüllen.

Selbstverständlich kann man diese Bedingungen auch erfüllen, ohne daß die Drallwinkel der ungeradzahligen und geradzahligen Schneiden paarweise jeweils gleich sind und sich um einen bestimmen Winkelwert unterscheiden.

An dem axial hinteren, d. h. dem Einspannende hin zugewandten Ende der nutzbaren Schneidenlänge des Fräsers, sollten die Umfangswinkelabstände die Bedingung a₄ < a₂ < a₁ < a₃ erfüllen.

Konkret kann man dies beispielsweise dadurch erreichen, daß man in einer axialen Mittelposition die Umfangswinkelabstände a₁ und a₄ auf jeweils 89° und die Umfangswinkelabstände a₂ und a₃ auf jeweils 91° einstellt. Weiterhin können gemäß einer bevorzugten Ausführungsform der Drallwinkel α der ungradzahligen Schneiden mit 37° und der Drallwinkel β der geradzahligen Schneiden mit 40° gewählt werden. Dies bedeutet, daß im axialen Abstand D, wobei D der Durchmesser des Werkzeugs ist, von dieser Mittelposition in Richtung des stirnseitigen Endes die Umfangswinkelabstände a₁, a₂, a₃ und a₄ in dieser Reihenfolge die Werte 79,2°; 100,8°; 81,2° und 98,8° annehmen, während sie in Richtung zum Einspannende hin in einem Abstand D in der selben Reihenfolge in etwa die Winkel 98,8°; 81,2°; 100,8° und 79,2° annehmen würden. Weiterhin würden in einem kleineren axialen Abstand von der Mittelposition, welcher etwa 1/5 des Durchmessers entspricht zum stirnseitigen Ende hin die Umfangswinkelabstände a₃ und a₄ den gleichen Wert (90°) annehmen, wobei a₁ und a₂ hier verschieden wären und auch a₁ ungleich a₂ wäre, während in dem selben Abstand von der Mittelposition in Richtung des Schachtendes die Umfangswinkelabstände a₁ und a₂ gleich werden (jeweils 90°) während die Umfangswinkelabstände a₃ und a₄ ungleich 90° und auch von einander verschieden sind.

An allen anderen axialen Positionen unterscheiden sich sämtliche vier Umfangswinkelabstände a1, a2, a3 und a4 voneinander.

Eine weitere Maßnahme, welche die beim Fräsen üblicherweise stoßartig auf die Schneidkanten einwirkenden Kräfte verringert, liegt darin, dass bei einer Ausführungsform der Erfindung die Hauptschneidkanten und die daran angrenzenden Freiflächen der Stege ein in axialer Richtung variierendes Profil aufweisen, das zum Beispiel im axialen Schnitt ein Wellen- oder Zahnprofil sein kann. Ein solches Profil führt zu einer Aufteilung der an der Schneidkante entstehenden Späne, die dadurch schmaler werden und bei entsprechender Ausgestaltung des Profils der aufeinander folgenden benachbarter Schneidstege eine entlang ihrer Breite variierende Dicke erhalten, die zu einem schnelleren Spanbruch führt. Insbesondere können die Wellenberge des Profils eines Steges gegenüber denen eines unmittelbar nachfolgenden Steges jeweils um den halben axialen Abstand zwischen axial benachbarten Wellenbergen in axialer Richtung versetzt sein. Alternativ kann der Versatz (jeweils in derselben Richtung) auch ein Drittel oder ein Viertel der vorstehend definierten Wellenlänge betragen. Durch diese Maßnahme vermeidet man, dass die gefräste Werkstückoberfläche die Wellen- oder Zahnkontur der Schneidkanten annimmt, da von einer Schneidkante hinterlassene Erhebungen der Werkstückoberfläche von der nächstfolgenden oder einer der weiteren Schneidkanten wieder abgetragen werden. Man kann daher trotz einer solchen Wellenkontur der einzelnen Schneidkanten selbst beim Schruppen bzw. einer Grobbearbeitung mit großen Vorschüben (bzw. großen Spandicken) insgesamt außerordentlich glatte Werkstückoberflächen erzielen, die bei größerer Zerspanungsleistung und verbesserter Standzeit sogar eine bessere Qualität aufweisen als die mit herkömmlichen Schaftfräsem hergestellten Werkstückoberflächen. Dies liegt vornehmlich an den verschiedenen erfindungsgemäßen Maßnahmen, die jegliche Vibrationsneigung stark herabsetzen und eine zeitlich besser gemittelte und variierende Verteilung der auf die Schneidkanten des Schaftfräsers wirkenden Kräfte bewirken.

In einer Ausführungsform sind die Schneiden des Fräsers einstückig mit diesem ausgebildet, dh. sie sind nicht an zusätzlich am Fräserkörper bzw. Fräserschaft angebrachten Schneidelementen vorgesehen.

In einer weiteren Ausführungsform ist der Fräser aus Vollhartmetall hergestellt. Auch in diesem Fall ist es zweckmäßig, wenn die Schneiden mit dem Schaft aus einem Stück gefertigt sind, was aber nicht ausschließt, daß gemäß einer weiteren Ausführungsform und abhängig davon, aus welchem Material der Fräserschaft oder die Schneiden bestehen, die Schneiden eine zusätzliche Beschichtung aus einem besonders verschleißfesten oder andere Eigenschaften (Spanbildung, Gleiteigenschaften) verbessernden Material aufweisen.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine Seitenansicht,
- Figuren 2 bis 4: drei verschiedene Querschnittsansichten und
- Figur 5: die äußeren Bereiche des Fräsers, dargestellt in einer Ebene.

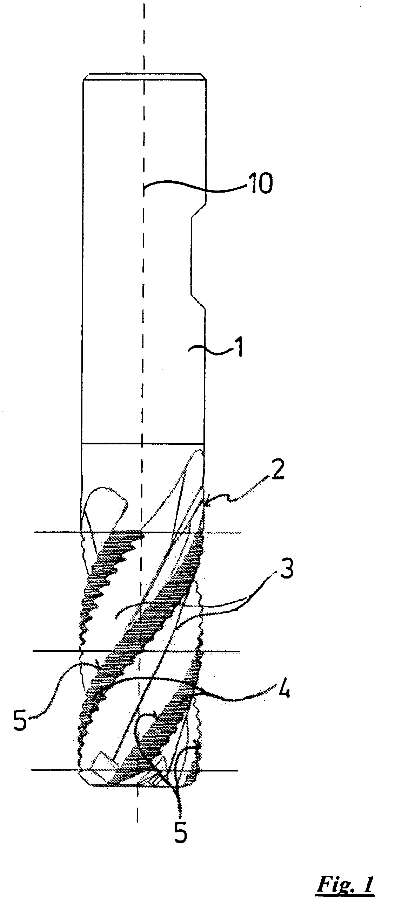

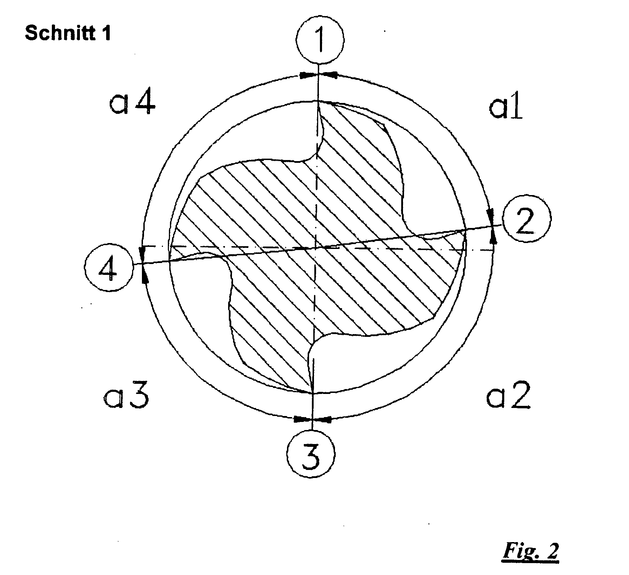

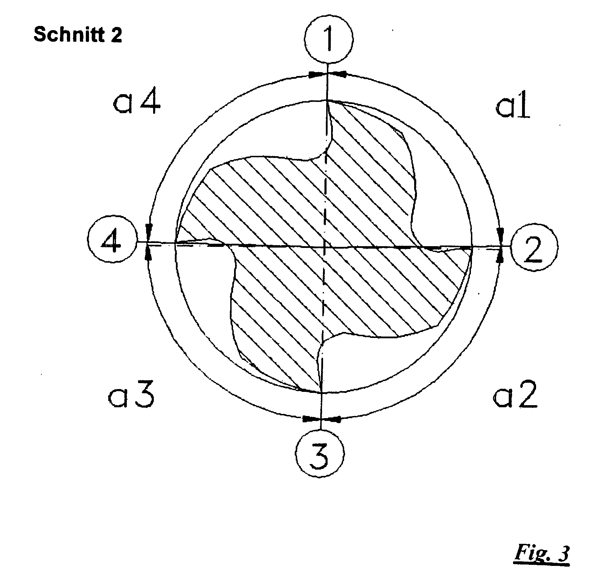

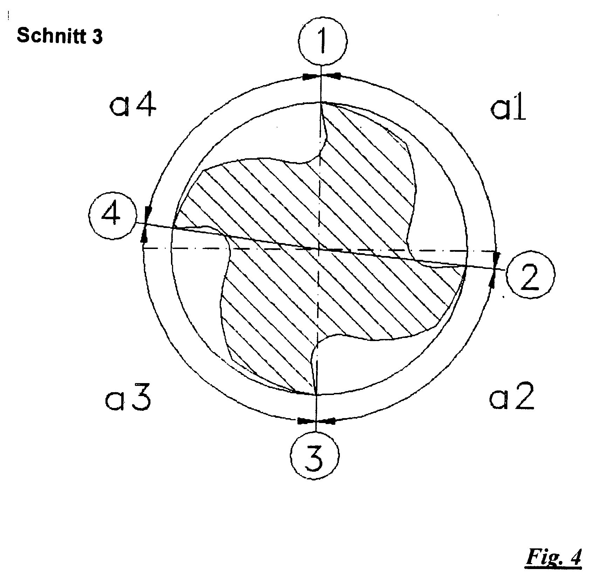

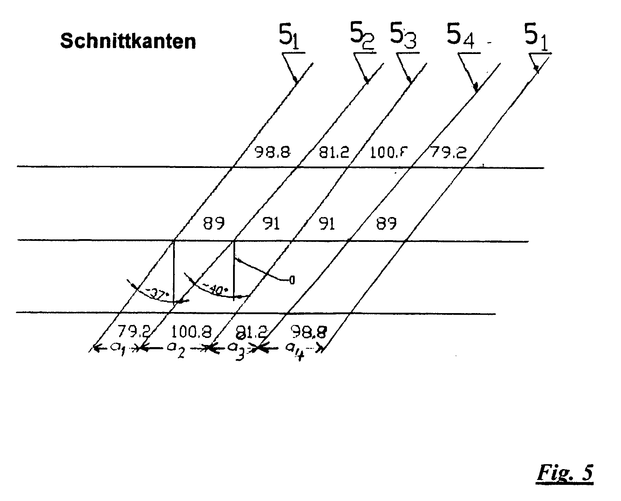

Man erkennt In Figur 1 einen Schaftfräser in einer Seitenansicht, der aus einem Einspannende 1 und einem Schneidteil 2 besteht. Das Schneidteil 2 weist Spannuten 3 und dazwischenliegende Schneidstollen oder Schneidstege 4 auf, die jeweils schraubenförmig umlaufende Schneidkanten 5 definieren. Diese entlang von Schraubenlinien um die Achse 10 des Schaftfräsers umlaufenden Schneidkanten verlaufen unter unterschiedlichen Steigungswinkeln α bzw. β bezüglich der Achse 10. In den Figuren 2 bis 5, welche sich alle auf dieselbe Ausführungsform beziehen, sind verschiedene Schnitte senkrecht zu der Achse 10 durch das Schneidtell 2 sowie (in Figur 5) eine Abwicklung der äußeren Umfangsoberfläche des Fräsers oder genauer gesagt nur der Schneidkanten 5 des Fräsers dargestellt. Dabei entspricht die Lage des in Figur 2 dargestellten Schnittes der Schnittlinie II-II in Figur 1, der in Figur 3 dargestellte Schnitt entspricht der Schnittlinie III-III in Figur 1 und der in Figur 4 dargestellte Schnitt entspricht der Schnittlinie IV-IV in Figur 1.

Die hier verwendeten Begriffe "vom", "hinten" (oder synonym "rückwärtig") und "zentral" beziehen sich dabei auf die Axialpositonen entlang des Schneidteils 2 des Schaftfräsers, wobei das in Figur 1 erkennbare, freie untere Ende des Schneidteils der Position "vom" entspricht

In Figur 5 sind die Schneidkanten 5 in einer Abwicklung in einer Ebene dargestellt. Zur besseren Unterscheidung sind die in diesem Fall vier Schneidkanten des Fräsers nach Figur 1 jeweils mit einem Index versehen und als 5₁, 5₂, 5₃ und 5₄ bezeichnet, wobei in der Abwicklung von links nach rechts ganz links die Schneidkante 5₁ dargestellt ist, die sich nach Abwicklung um 360° am rechten Ende der Figur 5 nochmals wiederholt. Wie man sieht, haben die Schneidkanten 5₁ bis 5₄ unterschiedliche Steigungen, wobei im vorliegenden Fall für die 4 Schneidkanten 5₁ bis 5₄ nur zwei verschiedene Steigungswinkel vorgesehen sind, und wobei die mit ungeraden Zahlen indexierten Schneiden 5₁ und 5₃ mit der Achse 10 hier konkret einen Winkel von etwa 37° einschließen, während die Schneidkanten mit den geradzahligen Indizes, nämlich die Schneidkanten 5₂ und 5₄, mit der Achse 10 einen Winkel von etwa 40° einschließen. Dies führt notwendigerweise dazu, daß, wie man auch in Figur 5 deutlich erkennt, die Umfangsabstände zwischen jeweils benachbarten Schneidkanten 5, die in Figur 5 den horizontalen Abständen zwischen den einzelnen Linien bzw. Schneidkanten 5₁ bis 5₄ entsprechen, über die axiale Länge des Schneidteiles 2 hinweg (d. h. in Figur 5 abhängig von der vertikalen Position) variieren.

Die Lage der Schnittlinien II-II, III-III und IV-IV aus Figur 1 ist in Figur 5 nochmals wiedergegeben. Dabei sind die Schneidkanten 5₁ bis 5₄ über den Umfang verteilt derart angeordnet, daß, unabhängig von der Lage irgendeiner beliebigen Schnittebene, die Umfangswinkelabstände a₁ bis a₄ zwischen benachbarten Schneidkanten 5 immer mindestens zwei und im allgemeinen sogar vier verschiedene Werte annehmen. Dabei sind die Differenzen der Umfangswinkelabstände, die in Abhängigkeit von der axialen Position variieren, in der Schnittebene III-III etwa in der axialen Mitte des Schneidteiles 2 am geringsten, wobei außerdem die Umfangswinkelabstände zwischen den Schneidkanten 5₁ und 5₂ und den Schneidkanten 5₄ und 5₁ jeweils den gleichen Wert haben und auch der Umfangswinkelabstand zwischen den Schneidkanten 5₂ und 5₃ gleich dem Umfangswinkelabstand zwischen den Schneidkanten 5₃ und 5₄ ist, und wobei die unterschiedlichen Umfangswinkelabstände a₁ und a₂ sowie a₃ und a₄ sich jeweils nur um 2° unterscheiden. Sowohl in Richtung auf das vordere Ende, d.h. in Richtung der Schnittebene II-II als auch in Richtung auf das rückwärtige Ende, d.h. in Richtung der Schnittebene IV-IV nehmen jedoch die Differenzen zwischen den Umfangswinkelabständen zu, wobei sich außerdem zumeist alle vier Umfangswinkelabstände zwischen den jeweils benachbarten Schneidkanten 5₁ bis 5₄ voneinander unterscheiden.

Dies ist anhand der Figur 5 leicht nachvollziehbar in der die Umfangswinkelabstände mit a₁ bis a₄ bezeichnet sind. Wie man sieht, wächst der Umfangswinkelabstand a₁ von der Spitze zum hinteren Ende, d.h. konkret von der Lage der vorderen Schnittebene II-II bis zu der hinteren Schnittebene IV-IV von 79,2 auf 98,8° an und ähnlich nimmt auch der Umfangswinkelabstand a₃ von 81,2 auf 100,8° zu, so daß die Umfangswinkelabstände a₁ und a₃ sich überall um jeweils 2° unterscheiden. Hingegen nimmt der Umfangswinkelabstand a₂ von der Schnittebene II zur Schnittebene IV kontinuierlich von 100,8 auf 81,2° ab, während der Umfangswinkelabstand a₄ von 98,8 auf 79,2° abnimmt, so daß auch die Umfangswinkelabstände a₂ und a₄ sich untereinander überall um jeweils 2° unterscheiden, während gegenüber den Umfangswinkelabständen a₁ und a₃ die Differenzen variieren. Zwischen der Schnittebene II und III und näher zu der Schnittebene III hin nehmen nur noch an einer Stelle zwei der Umfangswinkelabstände, nämlich a₃ und a₄, den gleichen Wert von 90° an, während sich jedoch in der selben axialen Position die Umfangswinkelabstände a₁ und a₂ untereinander und von den Abständen a₃ und a₄ unterscheiden und z.B. Werte von 88 und 92° einnehmen.

Axial hinter der Schnittebene III zu der Schnittebene IV, jedoch näher an der Schnittebene III, werden die Umfangswinkelabstände a₁ und a₂ an genau einer Position beide = 90°, während in der selben axialen Position jedoch die Umfangswinkelabstände a₃ und a₄ hiervon und voneinander verschieden sind und z. B. Werte von 92° bzw. 88° einnehmen.

Wie man erkennt, gibt es also in jeder axialen Position mindestens zwei verschiedene Umfangswinkelabstände und in nur zwei bestimmten axialen Positionen sind jeweils 2 der Umgangswinkelabstände gleich und in der zentralen axialen Positionen sind jeweils zwei Paare von Abständen gleich. Dies wird auch in den Schnittbildern der Figuren 2 bis 4 deutlich, wobei, wie anhand der Figur 5 erläutert wurde, die vier Umfangswinkelabstände a₁ bis a₄ in der in Figur 3 dargestellten (zentralen) Schnittebene III einander noch am nächsten kommen. Im vorderen Bereich, nämlich in der Schnittebene II, sind die Umfangswinkelabstände a₁ und a₃ jeweils kleiner als die Umfangswinkelabstände a₂ und a₄, aber auch untereinander verschieden, was entsprechend auch für die größeren Umfangswinkelabstände a₂ und a₄ gilt. In der Schnittebene IV, die in Figur 4 wiedergegeben ist, haben sich diese Verhältnisse umgekehrt und hier sind die Umfangswinkelabstände a₁ und a₃ größer als die Umfangswinkelabstände a₂ und a₄, aber auch untereinander jeweils verschieden.

Der erfindungsgemäße Schaftfräser hat eine Hauptarbeitsrichtung senkrecht zu der Achse 10, wobei die Schneidkanten 5₁ bis 5₄ intermittierend mit dem Werkstück in Eingriff treten. Wegen der unterschiedlichen Umfangswinkelabstände a₁ bis a₄ sind jedoch die Zeitabschnitte zwischen dem in Eingriff treten aufeinanderfolgender Schneidkanten mit dem Werkstück jeweils unterschiedlich, wobei außerdem diese Eingriffspunkte, bezogen auf die Schneidkante, ebenfalls variieren, da wegen des schraubenförmigen Verlaufs der Schneidkanten 5₁ bis 5₄ immer zuerst der in Umfangsrichtung vorangehende Bereich an der Spitze des Fräsers mit dem Werkstück in Eingriff kommt und dann erst die axial und in Umfangsrichtung dahinterliegenden Abschnitte. Insgesamt werden auf diese Weise jegliche Resonanzen und Vibrationen, wie sie aufgrund des intermittierenden Eingriffs der Schneidkanten eines Fräsers ansonsten sehr leicht auftreten können, verhindert, da zum einen zwei jeweils aufeinanderfolgende Schneidkanten einen anderen Umfangsabstand zueinander haben als die vorangehenden oder nachfolgenden Schneidkanten und da dieser Umfangsabstand auch noch über die Länge zweier benachbarter Schneidkanten hinweg variiert.

Zusätzlich sind, wie man vor allem in Figur 1 erkennt, die Schneidkanten wellenförmig oder zickzackförmig konturiert, was eine sehr effektive Spanbrechung bewirkt, so daß die entstehenden Späne relativ klein sind und keine nennenswerte Rückwirkung auf den Fräser ausüben. Dabei ist es zweckmäßig, wenn die Erhebungen und Vertiefungen auf benachbarten Stegen 4 axial nicht auf derselben Höhe liegen und so versetzt sind, daß entweder benachbarte oder einander gegenüberliegende Schneidstege 4 derart versetzte Strukturen haben, daß die Wellenberge des einen Steges axial auf derselben Höhe liegen wie die Wellentäler des anderen (nächsten oder übernächsten) Steges 4. Damit werden trotz dieser wellenförmigen Struktur der Stege 4 und der Schneidkanten 5, wie sie in Figur 1 deutlich zu erkennen ist, an einem Werkstück relativ glatte Strukturen erzeugt

Wegen der stark verminderten Vibrationsneigung des erfindungsgemäßen Schaftfräser erreicht dieser sehr gute Zerspanungsleistungen, d.h. ein hohes Zerspanungsvolumen In kurzer Zeit bei guter Oberflächenqualität und einer verbesserten Standzeit der Schneiden, die zusätzlich durch die wellenförmige Struktur der Stege und Schneidkanten unterstützt und verbessert wird.

## Patentansprüche

1. Schaftfräser, vorwiegend für die Grobbearbeitung metallischer Werkstücke, mit einer geraden Anzahl von entlang des Fräserumfanges spiralförmig umlaufenden Hauptschneiden (5₁, 5₂, 5₃, 5₄), welche abwechselnd einen relativ kleineren (α) und einen relativ größeren (β) Drallwinkel relativ zur Achse (10) des Fräsers aufweisen und wobei ungeradzahlige Hauptschneiden dadurch definiert sind, daß sie den kleineren Drallwinkel (α) mit der Achse einschließen und wobei unmittelbar an dem stirnseitigen Ende die Umfangswinkelabstände (aₙ) der in Rotationsrichtung aufeinanderfolgenden Hauptschneiden zwischen den ungeradzahligen Hautschneiden (5₁, 5₃) und den darauf folgenden geradzahligen Hauptschneiden (5₂, 5₄) kleiner sind als die Umfangswinkelabstände (aₙ) zwischen den geradzahligen Hauptschneiden (5₂, 5₄) und den darauf folgenden ungeradzahligen Hauptschneiden (5₁, 5₃), **dadurch gekennzeichnet, daß** alle Umfangswinkelabstände (aₙ) an dem stirnseitigen Ende des Fräsers voneinander verschieden sind, wobei die Umfangswinkelabstände der Hauptschneiden(5₁, 5₂, 5₃, 5₄) an dem stirnseitigen Ende des Fräsers und die unterschiedlichen Drallwinkel (α, β) derart gewählt sind, dass a) entlang des weiteren axialen Verlaufs der Hauptschneiden die Umfangswinkelabstände (aₙ) zwischen den Hauptschneiden an jeder axialen Position mindestens zwei verschiedene Werte annehmen, und daß b) an insgesamt höchstens 3 verschiedenen axialen Positionen jeweils mindestens zwei Umfangswinkelabstände gleich sind, während an allen anderen axialen Positionen alle Umfangswinkelabstände von einander verschieden sind.

2. Schaftfräser nach Anspruch 1, **dadurch gekennzeichnet, dass** jeder der umfangsseitigen Hauptschneiden eine stirnseitige Nebenschneide (11, 12, 13, 14) zugeordnet ist, die über eine vorzugsweise abgeschrägte oder abgerundete Schneidecke in die zugeordnete Hauptschneide übergeht.

3. Schaftfräser nach einem der Ansprüche 1 oder 2, **dadurch gekennzeichnet, daß** an einer axialen Position, die vorzugsweise in etwa einer axialen Mittelposition zwischen der Stirnseite und dem rückwärtigen Ende der Hauptschneiden entspricht, zwei Umfangswinkelabstände einen ersten, untereinander gleichen Wert haben und zwei weitere Umfangswinkelabstände einen zweiten, ebenfalls untereinander gleichen Wert haben.

4. Schaftfräser nach Anspruch 3, **dadurch gekennzeichnet, daß** die gleichen Umfangswinkelabstände jeweils benachbarte Umfangswinkelabstände sind.

5. Schaftfräser nach einem der Ansprüche 1 bis 4, **dadurch gekennzeichnet, daß** der Drallwinkel (α) der ungeradzahligen Hauptschneiden zwischen 35° und 39° liegt und insbesondere etwa 37° beträgt, und daß der Drallwinkel (β) der geradzahligen Hauptschneiden zwischen 38° und 42° liegt und insbesondere etwa 40° beträgt

6. Schaftfräser nach einem der Ansprüche 1 bis 5, **dadurch gekennzeichnet, daß** der Kerndurchmesser des Fräsers von der Stirnseite zum Einspannende hin kontinuierlich zunimmt.

7. Schaftfräser nach einem der Ansprüche 1 bis 6, **dadurch gekennzeichnet, daß** die Hauptschneidkanten (5₁, 5₂, 5₃, 5₄) und die daran angrenzenden Freiflächen der Stege (6,7,8,9) ein in axialer Richtung variierendes Profil aufweisen.

8. Schaftfräser nach Anspruch 7, **dadurch gekennzeichnet, daß** das Profil im axialen Schnitt ein Wellen- oder Zahnprofil ist.

9. Schaftfräser nach Anspruch 7 oder 8, **dadurch gekennzeichnet, daß** das Profil ein asymmetrisches Profil mit abwechselnd flacheren und steileren Flanken ist.

10. Schaftfräser nach einem der Ansprüche 1 bis 9, **dadurch gekennzeichnet, daß** die nutzbare axiale Schneidenlänge kleiner als der zweifache Nenndurchmesser des Fräsers ist.

11. Schaftfräser nach einem der Ansprüche 1 bis 10, **dadurch gekennzeichnet, dass**, ausgehend von der Stirnseite des Fräsers, nach Erreichen einer vorgebbaren axialen Position sich die Drallwinkel verändern, indem die relativ kleineren und größeren Drallwinkel zwischen geradzahligen und ungeradzahligen Hauptschneiden ausgetauscht werden

12. Schaftfräser nach einem der Ansprüche 1 bis 11, welcher genau vier Schneiden aufweist wobei aₙ (n=1,..4) der Winkel zwischen der Schneide n und der nächstfolgenden Schneide n+1 mod 4 ist, wobei an der Stirnseite des Fräsers folgende Bedingung gilt: a₁ <a₃<a₄<a₂.

13. Schaftfräser nach Anspruch 12, **dadurch gekennzeichnet, daß** etwa im Bereich einer axialen Mittelposition die Umfangswinkelabstände an eines vierschneidigen Fräsers die Bedingungen 88°< a₁ = a₄ < 89,5° und 90,5°< a₂ = a₃ < 92° erfüllen.

14. Schaftfräser nach einem der Ansprüche 1 bis 13, **dadurch gekennzeichnet, daß** an dem axial hinteren Ende der nutzbaren Hauptschneidenlänge die Umfangswinkelabstände aₙ die Bedingung a₄ < a₂ < a₁ < a₃ erfüllen, während am axial vorderen Ende die Bedingung a₁ < a₃ < a₄ < a₂ erfüllt ist.

## Claims

1. End mill, in particular for rough machining of metallic work pieces, comprising an even number of main cutting edges (5₁, 5₂, 5₃, 5₄) helically extending along the circumference of the mill, said main cutting edges alternately having a relatively smaller (α) and a relatively larger (β) helix angle relative to an axis (10) of the mill, and wherein odd-numbered main cutting edges being defined by forming said smaller helix angle (α) with the axis, and wherein immediately at the frontal end circumferential angular distances (aₙ) of the main cutting edges following one after another in a rotational direction between the odd-numbered main cutting edges (5₁, 5₃) and the successive even-numbered main cutting edges (5₂, 5₄) are smaller than the circumferential angular distances (aₙ) between said even-numbered main cutting edges (5₂, 5₄) and said successive odd-numbered main cutting edges (5₁, 5₃), **characterized in that** all circumferential angular distances (aₙ) at the frontal end of the mill differ from one another, wherein the circumferential angular distances of the main cutting edges (5₁, 5₂, 5₃, 5₄) at the front end of the mill and the different helix angles (α, β) are selected such that a) along the further axial course of the main cutting edges the circumferential angular distances between the main cutting edges in each axial position take at least two different values and that b) in at most a total of 3 different axial positions at least two circumferential angular distances are identical, while in all other positions all circumferential angular distances differ from one another.

2. End mill according to claim 1, **characterised in that** front end minor cutting edges (11, 12, 13, 14) are associated with each of said main cutting edges, preferably being joined via a cutting corner which may be rounded or chamfered.

3. End mill according to claim 1 or 2, **characterised in that** in an axial position preferably approximately corresponding to an axial central position between the frontal end and the rear end of the main cutting edges two circumferential angular distances have a first value which is identical among them, and two further circumferential angular distances have a second value which is also identical among them.

4. End mill according to claim 3, **characterised in that** the identical circumferential angular distances are respective adjoining circumferential angular distances.

5. End mill according to any one of claims 1 to 4, **characterised in that** the helix angle (α) of the odd-numbered main cutting edges is in the range between 35° and 39° and especially approximately 37° and that the helix angle (β) of the even-numbered main cutting edges is in the range between 38° and 42° and especially approximately 40°.

6. End mill according to any one of claims 1 to 5, **characterised in that** the core diameter of the mill continually increases from the frontal end towards the mounting end.

7. End mill according to any one of claims 1 to 6, **characterised in that** the main cutting edges (5₁, 5₂, 5₃, 5₄) and the adjoining clearance surfaces of the bars (6, 7, 8, 9) have a profile varying in an axial direction.

8. End mill according to claim 7, **characterised in that** in an axial section the profile is a wave or tooth profile.

9. End mill according to claim 7 or 8, **characterised in that** the profile is an asymmetric profile with alternating steeper and less steep flanks.

10. End mill according to any one of claims 1 to 9, **characterised in that** the utilisable axial cutting edge length is smaller than twice the nominal diameter of the mill.

11. End mill according to any one of claims 1 to 10, **characterised in that** the helix angles are changing by exchanging the relatively smaller and larger helix angles between the odd-and even-numbered cutting edges after reaching a predetermined axial position when starting out from the front end.

12. End mill according to any one of claims 1 to 11, comprising exactly four cutting edges, wherein aₙ(n=1, ...4) forms the angle between the cutting edge n and the next following cutting edge n+1 mod 4, wherein the following condition applies at the front end of the mill: a₁ < a₃ < a₄ < a₂.

13. End mill according to claim 12, **characterised in that** approximately in the area of an axial central position the circumferential angular distances of a mill with four cutting edges fulfil the conditions of 88° < a₁ = a₄ < 89.5° and 90.5° < a₂ = a₃ < 92°.

14. End mill according to any of claims 1 to 13, **characterised in that** at the axially rear end of the utilisable main cutting edge length the circumferential angular distances fulfil the condition of a₁ < a₃ < a₄ < a₂.

## Revendications

1. Fraise à queue, principalement pour le dégrossissage de pièces métalliques, comprenant un nombre pair de lames principales (5₁, 5₂, 5₃, 5₄) qui s'étendent en hélice le long de la périphérie de la fraise et qui forment alternativement un angle de pas relativement petit (α) et un angle de pas relativement grand (β) avec l'axe (10) de la fraise et dans laquelle les lames principales de numéro impair sont définies par le fait qu'elles forment le petit angle de pas (α) avec l'axe et dans laquelle, directement à l'extrémité côté frontal, les écarts angulaires circonférentiels (aₙ) des lames principales qui se suivent dans le sens de la rotation, entre les lames principales de numéro impair (5₁, 5₃) et les lames principales de numéro pair (5₂, 5₄) qui les suivent sont plus petits que les écarts angulaires circonférentiels (aₙ) entre les lames principales de numéro pair (5₂, 5₄) et les lames principales de numéro impair (5₁, 5₃) qui les suivent, **caractérisée en ce que** tous les écarts angulaires circonférentiels (aₙ) à l'extrémité frontale de la fraise sont différents les uns des autres, les écarts angulaires circonférentiels des lames principales (5₁, 5₂, 5₃, 5₄) à l'extrémité frontale de la fraise et les différents angles de pas (α, P) sont choisis de telle manière que, a) sur la suite de la longueur axiale des lames principales, les écarts angulaires circonférentiels (aₙ) entre les lames principales prennent dans chaque position axiale au moins deux valeurs différentes et b) dans chacune d'un nombre total maximum de 3 positions axiales différentes, au moins deux écarts angulaires circonférentiels sont égaux tandis que, dans toutes les autres positions axiales, tous les écarts angulaires circonférentiels sont différents les uns des autres.

2. Fraise à queue selon la revendication 1, **caractérisée en ce qu'**à chacune des lames principales périphériques est associée une lame auxiliaire frontale (11, 12, 13, 14) qui se raccorde à la lame principale correspondante par une arête de coupe qui est de préférence chanfreinée ou arrondie.

3. Fraise à queue selon la revendication 1 ou 2, **caractérisée en ce que**, dans une position axiale qui correspond de préférence, à peu près à une position axiale médiane entre le côté frontal et l'extrémité arrière des lames principales, deux écarts angulaires circonférentiels ont une première valeur identique et deux autres écarts angulaires circonférentiels ont aussi une deuxième valeur identique.

4. Fraise à queue selon la revendication 3, **caractérisée en ce que** les écarts angulaires circonférentiels identiques sont dans chaque cas deux écarts angulaires circonférentiels voisins.

5. Fraise à queue selon l'une des revendications 1 à 4, **caractérisée en ce que** l'angle de pas (α) des lames principales de numéro impair est compris entre 35° et 39°, et vaut en particulier à peu près 37° et **en ce que** l'angle de pas (β) des lames principales de numéro pair est compris entre 38° et 42°, et vaut en particulier à peu près 40°.

6. Fraise à queue selon l'une des revendications 1 à 5, **caractérisée en ce que** le diamètre du noyau de la fraise croît de façon continue en partant du côté frontal jusqu'à l'extrémité d'emmanchement.

7. Fraise à queue selon l'une des revendications 1 à 6, **caractérisée en ce que** les arêtes des lames principales (5₁, 5₂, 5₃, 5₄) et les surfaces libres des âmes (6, 7, 8, 9) qui leur sont adjacentes présentent un profil qui varie dans la direction axiale.

8. Fraise à queue selon la revendication 7, **caractérisée en ce que** le profil en coupe axiale est un profil ondulé ou dentelé.

9. Fraise à queue selon la revendication 7 ou 8, **caractérisée en ce que** le profil est un profil asymétrique possédant des flancs alternativement plus plats et plus raides.

10. Fraise à queue selon l'une des revendications 1 à 9, **caractérisée en ce que** la longueur de coupe axiale utilisable est inférieure au double du diamètre nominal de la fraise.

11. Fraise à queue selon l'une des revendications 1 à 10, **caractérisée en ce qu'**en partant du côté frontal de la fraise, au-delà d'une position axiale qui peut être prédéterminée, les angles de pas changent en ce sens que les angles de pas relativement plus petits et plus grands sont interchangés entre les lames principales de numéro pair et celles de numéro impair.

12. Fraise à queue selon l'une des revendications 1 à 11, qui présente précisément quatre lames, dans laquelle aₙ (n=1,..4), est l'angle entre la lame n et la lame immédiatement suivante n+1 mod 4, et la relation suivante est vérifiée sur le côté frontal de la fraise : a₁<a₃<a₄<a₂.

13. Fraise à queue selon la revendication 12, **caractérisée en ce qu'**à peu près dans la région d'une position axiale centrale, les écarts angulaires circonférentiels sur une fraise à quatre lames satisfont les conditions 88°<a₁=a₄<89,5° et 90,5°<a₂=a₃<92°.

14. Fraise à queue selon l'une des revendications 1 à 13, **caractérisée en ce qu'**à l'extrémité axiale arrière des longueurs utilisables des lames principales, les écarts angulaires circonférentiels aₙ satisfont la condition a₄<a₂<a₁<a₃, tandis qu'à l'extrémité axiale avant, la condition a₁<a₃<a₄<a₂ est satisfaite.
